# EUROPÄISCHE PATENTANMELDUNG

(11) **EP 1 860 575 A1**
(43) Veröffentlichungstag der Anmeldung: **28.11.2007**
(21) Anmeldenummer: 06010007.0
(22) Anmeldetag: 16.05.2006
(51) Int. Cl.: G06F 17/30

(54) **Verfahren zur Bewertung einer auf einer Netzwerkseite darzustellenden Information**

(71) Anmelder: HURRA Communications GmbH, 70599 Stuttgart (DE)
(72) Erfinder: Schweier, René, 70599 Stuttgart (DE)
(74) Vertreter: Wörz, Volker Alfred

(57) **Zusammenfassung**

Um eine Bewertung einer von einem Informationsserver auf einer ersten Netzwerkseite darzustellenden Information zu ermöglichen, die mit relativ geringem Aufwand implementiert werden kann und dennoch eine ausreichende Bewertung der Informationen und somit eine Erhöhung der Relevanz erlaubt, wobei die Netzwerkseite durch Aktivierung eines auf mindestens einer weiteren Netzwerkseite dargestellten Links durch einen Benutzer anforderbar ist und bei einer Aktivierung des Links einer der weiteren Netzwerkseite zugeordnete Kennung an den Informationsserver übermittelt wird, wird vorgeschlagen, in Abhängigkeit von mindestens einer Eigenschaft der Kennung ein Benutzerinteresse abzuleiten und die darzustellende Information als relevant bezüglich dieses Benutzerinteresses zu bewerten.

## Beschreibung

Die Erfindung betrifft ein Verfahren zur Bewertung einer von einem Informationsserver auf einer ersten Netzwerkseite darzustellenden Information, wobei die Netzwerkseite durch Aktivierung eines auf mindestens einer weiteren Netzwerkseite dargestellten Links durch einen Benutzer anforderbar ist und bei einer Aktivierung des Links einer der weiteren Netzwerkseite zugeordnete Kennung an den Informationsserver übermittelt wird.

Die Erfindung betrifft auch ein Client-Server-System, umfassend einen mit einem Kommunikationsnetzwerk verbindbaren Client und einen mit dem Kommunikationsnetzwerk verbindbaren Informationsserver, wobei der Informationsserver Mittel zur Übermittlung mindestens einer auf einer Netzwerkseite darzustellenden Information an den Client in Abhängigkeit von einer Aktivierung eines auf mindestens einer weiteren Netzwerkseite dargestellten Links aufweist und wobei das Client-Server-System eine Auswerteeinheit und Mittel zur Übermittlung einer der weiteren Netzwerkseite zugeordneten Kennung an die Auswerteeinheit aufweist.

Die Erfindung betrifft ferner einen Informationsserver, der mit einem Client-Server-System über ein Kommunikationsnetzwerk verbindbar ist.

Die Erfindung betrifft des Weiteren ein Computerprogramm, das auf einem Client-Server-System, insbesondere auf einem Informationsserver, ablauffähig ist.

Als Informationsserver wird ein mit einem Kommunikationsnetzwerk verbundener Server bezeichnet, der Informationen zum Abruf bereithält. Ein Informationsserver kann beispielsweise ein mit dem als Internet ausgebildeten Kommunikationsnetzwerk verbundenes Informationsportal sein, von dem mittels eines als Personal Computer, PDA (Personal Digital Assistant) oder Smartphone ausgebildeten Clients Information angefordert werden können. Der Informationsserver veranlasst im Falle einer Informationsanforderung die Übermittlung der angeforderten Informationen, beispielsweise in Form einer so genannten Netzwerkseite oder Web-Page, über das Kommunikationsnetzwerk an den Client. Ein Informationsserver kann auch als ein Online-Shop, ein Newsserver, eine Internetzeitung oder als eine Suchmaschine ausgebildet sein. Informationen können hierbei in einer Vielzahl unterschiedlicher Datenformate vorgehalten bzw. abgerufen werden.

Netzwerkseiten ist häufig eine Kennung zugeordnet. Beispielsweise sind Netzwerkseiten innerhalb des durch das Internet gebildeten und als Worldwide Web (WWW) bezeichneten multimedialen Informationssystems mittels einer so genannten URL (Uniform Resource Locator) adressierbar. Eine URL ermöglicht häufig die Identifizierung einer bestimmten Netzwerkseite. Eine URL umfasst beispielsweise Informationen bezüglich des die Netzwerkseite zum Abruf bereitstellenden Informationsservers, einen Verzeichnispfad und einen der Netzwerkseite innerhalb des Informationsservers zugeordneten Bezeichner. Eine URL ermöglicht es dadurch, die dieser URL zugeordnete Netzwerkseite mittels eines Clients durch Anwählen dieser URL anzufordern.

Häufig wird eine Netzwerkseite nicht von dem Informationsserver vollständig zum Abruf vorgehalten, sondern erst in Abhängigkeit von einer Informationsanforderung dynamisch erzeugt. In diesem Fall werden die auf der Netzwerkseite darzustellenden Informationen in Abhängigkeit von der Informationsanforderung zusammengestellt und an den anfordernden Client übermittelt. In derartigen Fällen kann der dynamisch erzeugte Netzwerkseite häufig eine die Informationsanforderung selbst beschreibende Information zugeordnet werden.

Der Informationsserver ist beispielsweise als eine Suchmaschine ausgebildet, mittels der eine Suche nach Informationen möglich ist. Hierzu wählt ein Benutzer mittels eines Clients eine bestimmte Netzwerkseite, beispielsweise eine der Suchmaschine zugeordnete Startseite, an und übermittelt einen oder mehrere Suchbegriffe an die Suchmaschine. In Abhängigkeit von diesen Suchbegriffen wählt die Suchmaschine Informationen aus, die beispielsweise in Form einer auf einer dynamisch erzeugten Netzwerkseite darstellbaren Ergebnisliste an den Client übermittelt werden. Die Ergebnisliste beinhaltet meist verweise (so genannte Links) zu weiterführenden Informationen, die ebenfalls in Form einer oder mehrerer Netzwerkseiten anforderbar sind. Derartige Links beinhalten beispielsweise wiederum URLs, die der jeweiligen weiterführenden Information zugeordnet sind. Eine Aktivierung eines derartigen Links führt dann zu einer automatischen Anforderung der entsprechenden Netzwerkseite.

Vom Markt her sind eine Vielzahl von Verfahren zur Bewertung von auf einer Netzwerkseite darzustellenden Informationen bekannt. Ist der Informationsserver beispielsweise als eine Suchmaschine ausgebildet, so ist es bekannt, die innerhalb der Ergebnisliste zu übertragenden Informationen bezüglich der Suchbegriffe zu bewerten. In Abhängigkeit einer derartigen Bewertung erfolgt dann die Positionierung der Informationen beispielsweise derart, dass die Information, die mit höchster Wahrscheinlichkeit relevant ist, an erster Stelle angezeigt wird. Eine derartige Bewertung der Informationen beziehungsweise der weiterführenden Informationen erfordert beispielsweise eine Analyse des Inhalts bezüglich des Vorkommens einer oder mehrerer Suchbegriffe (so genanntes Matching). Um eine erhöhte Relevanz der darzustellenden Informationen zu erreichen, ist es ferner bekannt eine Relevanz und damit eine Position, an der die Information dargestellt werden soll, dadurch zu ermitteln, dadurch zu ermitteln dass geprüft wird, von welchen anderen Netzwerkseiten ein Link zu der zu bewertenden Netzwerkseite existiert. Je mehr Links auf eine Netzwerkseite zeigen, als desto höher wird die Netzwerkseite bewertet. Derartige Verfahren sind beispielsweise Bestandteil so genannter Ranking-Verfahren.

Informationen, die bewertet sind, bieten grundsätzlich die Möglichkeit, zunächst derartige Informationen zu übertragen, die mit höherer Wahrscheinlichkeit relevant sind. Anders ausgedrückt ermöglichen es Bewertungsverfahren, Informationen, die mit hoher Wahrscheinlichkeit eine nur geringe Relevanz haben, nicht beziehungsweise zunächst nicht an den Client zu übertragen. Dies ermöglicht eine signifikante Reduzierung des über ein Kommunikationsnetzwerk zu übertragenden Gesamtdatenvolumens.

Die stetig steigende Anzahl der Zugriffe auf Suchmaschinen oder sonstige Informationsserver zeigt, dass ein Benutzer häufig spezielle Informationen sucht. Um hierbei die Menge der über das Kommunikationsnetzwerk zu übertragenden Daten zu reduzieren, existieren so genannte Meta-Suchmaschinen, die ihrerseits bei vorliegen einer Anfrage von einem Client mittels eines Suchbegriffs gezielte Anfragen an Suchmaschinen richten, die Ergebnisse bewerten und eine Liste der bewerteten Ergebnisse an den Client übermitteln, um die Trefferwahrscheinlichkeit nochmals zu erhöhen und damit die Anzahl von ergebnislosen Suchvorgängen zu reduzieren, so dass eine Verschwendung der Ressourcen des Kommunikationsnetzwerks durch Übertragen von nicht relevanten Daten reduziert wird.

Um das stark ansteigende über ein Kommunikationsnetzwerk zu übertragende Datenvolumen zu beherrschen, werden eine Vielzahl weiterer Techniken eingesetzt. Beispielsweise werden Kommunikationsnetze eingesetzt, die erhöhte Bandbreiten aufweisen. Ferner werden Kompressionsalgorithmen entwickelt und eingesetzt, mittels derer das zu übertragende Datenvolumen reduziert werden kann.

Es ist auch bekannt, Informationen auf vorbestimmten Servern (so genannte Proxy-Server) oder in vorbestimmten Speicherbereichen (Cache) zwischenzuspeichern. Eine Anforderung einer Information wird dann beispielsweise von einem möglichst gering belasteten Server erfüllt oder aus dem Cache ausgelesen.

Es ist ferner bekannt, auf einer angeforderten Netzwerkseite Zusatzinformationen darzustellen. Eine Zusatzinformation kann hierbei jede Art von Information sein, die an den Client übermittelt wird, jedoch von dem Client nicht explizit angefordert wurde. Hierbei kann die Zusatzinformation beispielsweise in Abhängigkeit von einem dem Benutzer zugeordneten Benutzerprofil ausgesucht werden, so dass diese Zusatzinformation eine möglichst hohe Relevanz für den Benutzer haben kann.

Die bekannten Verfahren zur Bewertung von auf einer Netzwerkseite darzustellenden Informationen haben jedoch den Nachteil, dass sie nur sehr aufwändig zu implementieren sind und dennoch häufig eine unzutreffende Bewertung liefern.

Es ist deshalb Aufgabe der Erfindung, eine Möglichkeit zur Bewertung einer auf einer Netzwerkseite darzustellenden Information zu schaffen, die mit relativ geringem Aufwand implementiert werden kann und dennoch eine ausreichende Bewertung der Informationen und somit eine Erhöhung der Relevanz ermöglicht.

Die Aufgabe wird durch ein Verfahren der eingangs genannten Art dadurch gelöst, dass in Abhängigkeit von mindestens einer Eigenschaft der Kennung ein Benutzerinteresse abgeleitet wird und die darzustellende Information als relevant bezüglich dieses Benutzerinteresses bewertet wird.

Gemäß des erfindungsgemäßen Verfahrens wird auf der weiteren Netzwerkseite ein Link zu der ersten Netzwerkseite dargestellt. Aktiviert ein Benutzer den Link, so wird eine Anforderung der ersten Netzwerkseite an den Informationsserver übermittelt. Diese Anforderung enthält eine Kennung, die der weiteren Netzwerkseite, auf der der Link dargestellt ist, zugeordnet ist. Eine derartige Kennung wird beispielsweise als sogenannter Referrer bezeichnet. Die Kennung beschreibt beispielsweise die URL der weiteren Netzwerkseite.

Eine Eigenschaft der Kennung kann insbesondere die Kennung selbst sein. Vorzugsweise ist eine Eigenschaft der Kennung jedoch eine Adresse des Informationsservers, von dem die weitere Netzwerkseite angefordert wurde. Besonders vorteilhaft ist es auch, wenn die Eigenschaft ein Datum oder eine Uhrzeit beschreibt. Das Datum oder die Uhrzeit kann beispielsweise den Zeitpunkt der Anforderung der weiteren Netzwerkseite oder den Zeitpunkt der Aktivierung des Links beschreiben. Die Eigenschaft kann auch den Informationsserver selbst bezeichnen, von dem die weitere Netzwerkseite angefordert wurde.

Ist der Informationsserver, von dem die weitere Netzwerkseite angefordert wurde, beispielsweise als ein so genannter Online-Shop ausgebildet, so kann die Kennung auch ein Produkt bezeichnen, das der Benutzer bei dem Online-Shop gekauft hat. Ist der Informationsserver, von dem die weitere Netzwerkseite angefordert wurde, als eine Suchmaschine ausgebildet, beziehungsweise ist diesem Informationsserver eine Suchmaschine zugeordnet, so kann die Eigenschaft insbesondere auch einen oder mehrere Suchbegriffe beschreiben. Daraus kann besonders vorteilhaft ein Benutzerinteresse abgeleitet werden.

Aufgrund des Vorliegens der mindestens einen Eigenschaft wird auf ein Benutzerinteresse geschlossen. Ferner wird darauf geschlossen, dass die Information, die mittels der ersten Netzwerkseite dargestellt werden soll, bezüglich des so abgeleiteten Benutzerinteresses relevant ist.

Das erfindungsgemäße Verfahren unterscheidet sich damit grundsätzlich von den bekannten Verfahren dadurch, dass eine Bewertung nicht mit aufwändigen Verfahren durchgeführt wird, bevor eine Information angefordert wird, sondern eine Bewertung wird mit der Anforderungsinformation selbst durchgeführt. Hierbei werden Eigenschaften der Anforderung selbst ausgenutzt. Daraus kann mit hoher Wahrscheinlichkeit geschlossen werden, dass die zu übermittelnde Information für den Benutzer relevant ist.

Gemäß einer besonders bevorzugten Ausführungsform des erfindungsgemäßen Verfahrens wird die Eigenschaft abgespeichert und bei einer erneuten Aktivierung des Links oder eines auf einer weiteren Netzwerkseite dargestellten und auf die erste Netzwerkseite verweisenden Links wird ein Benutzerinteresse in Abhängigkeit von der mindestens einen abgespeicherten Eigenschaft und der aktuell erfassten Eigenschaft abgeleitet. Damit ist ein präziseres Benutzerinteresse ableitbar, insbesondere sind Benutzerinteressen bezüglich unterschiedlicher Gesichtspunkte ableitbar. Diese Gesichtspunkte können beispielsweise unterschiedliche Eigenschaften der Kennungen betreffen.

Das mittels des erfindungsgemäßen Verfahrens abgeleitete Benutzerinteresse spiegelt nicht notwendig das Interesse eines speziellen Benutzers wider. Vielmehr kann damit ein allgemeines Benutzerinteresse abgeleitet werden. Ist die Eigenschaft beispielsweise ein Suchbegriff, der von einem Benutzer der weiteren Netzwerkseite eingegeben wurde und aufgrund dessen auf der weiteren Netzwerkseite ein Link zu der ersten Netzwerkseite dargestellt wurde, beispielsweise weil die erste Netzwerkseite ein Teil der Ergebnisliste ist, so kann durch eine Auswertung der Suchbegriffe ein grundsätzliches Interesse der Benutzer abgeleitet werden, die die erste Netzwerkseite anfordern. Es wird folglich aufgrund dessen, dass die erste Netzwerkseite beziehungsweise die darauf darzustellende Information angefordert wird, darauf geschlossen, dass diese Information für die Benutzer relevant ist. Die hierbei ermittelten Benutzerinteressen werden dann abgespeichert. Mit jeder weiteren Anforderung der ersten Netzwerkseite kann das Benutzerinteresse dann erweitert beziehungsweise verfeinert werden.

Für die Durchführung des gesamten Verfahrens ist es grundsätzlich unerheblich, ob die erste Netzwerkseite und die weitere Netzwerkseite von demselben Informationsserver oder von unterschiedlichen Informationsservern bereitgehalten werden beziehungsweise angefordert werden können.

Gemäß einer weiteren Ausführungsform des erfindungsgemäßen Verfahrens wird das Benutzerinteresse abgespeichert. Insbesondere ist es möglich, sowohl Eigenschaften als auch ermittelte Benutzerinteressen abzuspeichern. Dies kann beispielsweise in einem dem Informationsserver zugeordneten Speicherbereich oder eine Datenbank geschehen. Es ist ferner möglich, hierfür einen weiteren Server vorzusehen, der sowohl in Hardware als auch in Software realisiert sein kann. Beispielsweise kann der weitere Server in Software realisiert sein und auf einer dem Informationsserver zugeordneten Hardware ablaufen.

Vorzugsweise wird eine Gewichtung der Eigenschaften oder der Benutzerinteressen durchgeführt, wobei das Gewicht den Einfluss der Eigenschaft beziehungsweise des Benutzerinteresses bezüglich eines neu abgeleiteten Benutzerinteresses beschreibt. Beispielsweise wird eine aktuell erfasste Eigenschaft höher gewichtet als eine bereits abgespeicherte Eigenschaft oder es wird ein von einer aktuell erfassten Eigenschaft abgeleitetes Benutzerinteresse höher bewertet als ein bereits abgespeichertes Benutzerinteresse. Damit ist es möglich, einerseits ein Benutzerinteresse für die Bewertung der Information heranzuziehen, das das Interesse der Gesamtheit der Benutzer beschreibt, und andererseits ein Benutzerinteresse auszuwerten, das das Interesse des aktuell anfordernden Benutzers beschreibt.

Vorzugsweise wird eine Gewichtung in Abhängigkeit von einem der Erfassung der Kennung zugeordneten Zeitpunkt, einem der Bildung des Benutzerinteresses zugeordneten Zeitpunkt und/oder einer Art der Eigenschaft gebildet. Beispielsweise ist es vorstellbar, dass die Eigenschaft oder das Benutzerinteresse zunehmend geringer gewichtet wird, je mehr Zeit seit der Erfassung vergangen ist, sodass der Einfluss von älteren Eigenschaften geringer ist bei der Bewertung der Netzwerkseite beziehungsweise der darzustellenden Information. Ferner kann beispielsweise ein Suchbegriff höher gewichtet werden als die Bezeichnung eines Produkts, das von einem Benutzer gekauft wurde, oder den Namen eines Informationsservers. Damit lässt sich nochmals eine präzisere Bewertung erzielen.

Vorzugsweise wird das Benutzerinteresse zusätzlich in Abhängigkeit von einer Klassifizierung der ersten Netzwerkseite und/oder des Informationsservers gebildet. Eine derartige Klassifizierung kann beispielsweise bezüglich eines thematischen Inhalts, einer Informationsart oder einer Datenart erfolgen.

Ist der Informationsserver beispielsweise als Online-Shop ausgebildet, so kann das Benutzerinteresse derart ausgedrückt werden, dass sich daraus auf Produkte schließen lässt, die von den Benutzern besonders nachgefragt werden. Eine Klassifizierung bezüglich einer Informationsart kann beispielsweise beschreiben, ob die darzustellende Information aktuelle Nachrichten, Produktinformationen oder eine Ergebnisliste auf eine Suchanfrage zum Inhalt hat. Eine Datenart kann beispielsweise beschreiben, ob die darzustellende Information Text, Audio- oder Videodaten enthält.

Mittels derartiger Klassifizierungen kann eine nochmals präzisere Bewertung der darzustellenden Information dadurch gebildet werden, dass eine genauere Bestimmung des Benutzerinteresses möglich ist.

Vorzugsweise wird die auf der ersten Netzwerkseite darzustellende Information in Abhängigkeit von dem abgeleiteten Benutzerinteresse ausgewählt. Es werden folglich die überhaupt möglichen darstellbaren Informationen zunächst bezüglich des Benutzerinteresses derart bewertet, dass eine Aussage über die Relevanz dieser Informationen möglich ist. Tatsächlich wird dann die Information ausgewählt und auf der Netzwerkseite dargestellt, die eine möglichst hohe Relevanz hat. Damit kann eine nochmals weitere Reduzierung der über das Kommunikationsnetzwerk zu übertragenden Daten erreicht werden.

Die bisher beschriebenen Ausführungsformen ermöglichen es, eine Information bezüglich eines Benutzerinteresses zu bewerten und gegebenenfalls die Information für eine Darstellung auszuwählen, die die höchste Relevanz aufweist, ohne dass so genannte Profilinformationen einzelner Benutzer vorliegen. Dies ist besonders vorteilhaft, da das Sammeln und Auswerten von Profilinformationen regelmäßig schwierig ist. Werden beispielsweise Profilinformationen mittels eines Cookies übertragen, so ist meistens nur eine Übertragung der Profilinformation an den Server beziehungsweise Informationsserver möglich, bei dem die Profilinformation erzeugt wurde. Werden Profilinformationen in externen Datenbanken vorgehalten, so müssen hierbei Datenschutzrichtlinien einerseits beachtet werden und andererseits sind aufwändige Verfahren notwendig, um derartige Profile beziehungsweise Profilinformationen aktuell zu erhalten. Das erfindungsgemäße Verfahren ermöglicht demgegenüber grundsätzlich die Bildung eines allgemeinen Benutzerinteresses unabhängig von derartigen Profilinformationen.

Liegen jedoch derartige Profilinformationen vor, so ist es vorteilhaft, wenn die darzustellende Information beziehungsweise die erste Netzwerkseite auch in Abhängigkeit von einer dem Benutzer zugeordneten Profilinformation ausgewählt wird. Diese Profilinformation kann beispielsweise mittels eines Cookies übertragen werden. Mittels dieser Ausführungsform ist eine noch präzisere Auswahl der darzustellenden Information möglich.

Vorteilhafterweise wird die Profilinformation in einem Benutzerprofil abgespeichert. Ein derartiges Benutzerprofil kann beispielsweise von einem Profilserver verwaltet werden.

Liegt eine Profilinformation vor, so kann vorteilhafterweise das Benutzerinteresse zusätzlich in Abhängigkeit von der Profilinformation gebildet werden. Insbesondere wenn eine Vielzahl von Profilinformationen von vielen Benutzern vorliegen, kann auf ein allgemeines Benutzerinteresse geschlossen werden. Liegen nur wenige Profilinformationen vor, beziehungsweise liegt insbesondere eine Profilinformation des aktuellen Benutzers vor, so kann diese Profilinformation besonders hoch gewichtet werden. Allgemeine Benutzerinteressen können hingegen beispielsweise geringer gewichtet werden. Damit kann eine besonders flexible Bewertung der darzustellenden Information erreicht werden, die einerseits die Interessen des aktuellen Benutzers berücksichtigt, aber auch in durch die Gewichtung vorgegebenem Maße allgemeine Benutzerinteressen berücksichtigt.

Gemäß einer anderen vorteilhaften Ausführungsform beschreibt die auf der ersten Netzwerkseite darzustellende Information einen Link zu einer weiteren Information. Es wird also in Abhängigkeit des ermittelten Benutzerinteresses ein Link zu einer weiteren Information ausgewählt und damit implizit die weitere Information ausgewählt. Die weitere Information kann insbesondere eine Zusatzinformation, beispielsweise ein Werbe-Banner, sein.

Gemäß einer bevorzugten Ausführungsform des erfindungsgemäßen Verfahrens, wird zusammen mit der weiteren Netzwerkseite eine Instruktion an den Client übermittelt, die den Client bei einer Anforderung der ersten Netzwerkseite veranlasst, die Kennung an den ersten Informationsserver zu übermitteln. Auf dem Client läuft beispielsweise ein Browser ab, mittels dessen der Benutzer Informationsanforderungen an die Informationsserver oder Suchmaschinen übermitteln kann und mittels dessen erhaltenen Informationen oder Netzwerkseiten interpretiert und dem Benutzer dargestellt werden. Fordert der Benutzer bzw. der Client nun die weitere Netzwerkseite an und übermittelt hierzu beispielsweise Suchbegriffe, so kann der Browser diese Informationen automatisch abspeichern. Erhält der Benutzer die angeforderte Information, beispielsweise die Ergebnisliste der Suchanfrage, in Form der weiteren Netzwerkseite, so kann diese Netzwerkseite die Instruktion enthalten. Bei einer Aktivierung des auf der weiteren Netzwerkseite dargestellten Links und der dadurch ausgeführten Anforderung der ersten Netzwerkseite von dem Informationsserver, veranlasst die Instruktion den Browser bzw. den Client, die Kennung an den Informationsserver zu übermitteln.

Damit kann einerseits erreicht werden, dass derartige Kennungen an den Informationsserver übermittelt werden, die Eigenschaften enthalten, die für den Informationsserver von besonderem Interesse sind, da die Instruktion insbesondere angeben kann, welche Eigenschaften an den Informationsserver übermittelt werden sollen. Andererseits kann damit erreicht werden, dass nur dann eine Kennung an den Informationsserver übermittelt und ausgewertet wird, wenn die Instruktion zusammen mit der weiteren Netzwerkseite an den Client übermittelt wird.

Vorzugsweise wird die Instruktion in Form eines Skripts oder eines Tags an den Client übermittelt. Ein derartiges Skript kann beispielsweise als ein Java-Script oder ein Perl-Script ausgebildet sein. Die Instruktion kann damit in die weitere Netzwerkseite integriert werden. Die Instruktion kann beispielsweise auch in Form eines sogenannten image-tags übermittelt werden, das eine nahezu nicht-sichtbare Bildinformation bezeichnet, wobei der Bildinformation eine Textinformation zugeordnet ist, die von dem Client bzw. dem Browser interpretiert, jedoch dem Benutzer nicht dargestellt wird.

In einer vorteilhaften Weiterbildung des erfindungsgemäßen Verfahrens übermittelt der Informationsserver die bezüglich der darzustellenden Information erzeugte Bewertung oder mindestens einen Eigenschaft der bei der Bildung der Bewertung herangezogenen Kennungen an eine Suchmaschine. Die Suchmaschine führt in Abhängigkeit von der Bewertung, beziehungsweise der Kennungen, ein Ranking derjenigen Informationen durch, die in Beantwortung einer Suchanfrage in Form einer Ergebnisliste von der Suchmaschine erzeugt werden. Hierbei umfasst die Ergebnisliste insbesondere Links zu einer oder mehrerer derjenigen Informationen, bezüglich derer eine Bewertung oder eine für die Erzeugung der Bewertung herangezogene Kennung von dem Informationsserver an die Suchmaschine übermittelt worden ist.

Dies ermöglicht eine besonders effiziente Realisierung eines Ranking-Verfahrens, das auf der tatsächlichen Relevanz der Informationen beruht, die sich in der Bewertung widerspiegelt. Die bei bekannten Ranking-Verfahren üblichen aufwändigen Verfahren zur Gewinnung der Bewertungen, die meist eine Analyse des Inhalts der Informationen und eine Ermittlung einer Vielzahl weiterer Informationen benötigen, die auf die zu bewertende Information verweisen, ist gemäß der Weiterbildung des erfindungsgemäßen Verfahrens nicht notwendig. Dadurch kann insbesondere auch die Belastung des Kommunikationsnetzes deutlich reduziert werden.

Vorzugsweise übermitteln eine Vielzahl von Informationsservern die erzeugten Bewertungen oder jeweils mindestens eine Eigenschaft der bei der Bildung der Bewertungen herangezogenen Kennungen an die Suchmaschine. Dies ermöglich einerseits, dass eine viel größere Anzahl von darzustellenden Informationen, auf die von der Suchmaschine in Form einer Ergebnisliste verwiesen wird, von der Suchmaschine mittels des Ranking-Verfahrens klassifiziert werden können. Andererseits ist es möglich, das Ranking beispielsweise dadurch zu verfeinern, dass eine Gewichtung in Abhängigkeit von einer Eigenschaft der Kennung durchgeführt wird. Die Gewichtung kann beispielsweise derart durchgeführt werden, dass eine Kennung, die aufgrund der Anforderung einer bestimmten weiteren Netzwerkseite erzeugt wurde, besonders hoch gewichtet wird, wenn diese weitere Netzwerkseite von einem vorgebbaren (weiteren) Informationsserver angefordert wurde.

Hierbei kann selbstverständlich auch der weitere Informationsserver selbst als Suchmaschine ausgebildet sein. Damit kann also einerseits implizit teilweise auf die Ergebnisse bestehender Ranking-Verfahren zurückgegriffen werden, andererseits kann damit erreicht werden, dass der Grad des Einflusses eines auf einer bestimmten Suchmaschine realisierten, bestehenden Ranking-Verfahrens mittels der Gewichtung vorgebbar ist.

Bestehende Ranking-Verfahren werden implizit insofern mitverwendet, als der Link, der von dem Benutzer angefordert wird und auf die erste Netzwerkseite verweist, selbst auch mittels des ursprünglichen Ranking-Verfahrens auf der weiteren Netzwerkseite dargestellt worden ist und somit der Link in Abhängigkeit von der daraus resultierenden Position von dem Benutzer aktiviert wurde.

Gleichzeitig erfährt die Positionierung implizit möglicherweise eine Korrektur dadurch, dass der Benutzer einen Link auswählt und diesen aktiviert. Dieses Verhalten wiederum geht automatisch in die Bewertung der darzustellenden Information bzw. der ersten Netzwerkseite ein, so dass in dieser Weiterbildung des erfindungsgemäßen Verfahrens automatisch eine verbessertes Ranking erreichbar ist.

Die Aufgabe wird auch durch ein Client-Server-System der eingangs genannten Art dadurch gelöst, dass das Client-Server-System Mittel zur Bildung eines Benutzerinteresses in Abhängigkeit von mindestens einer Eigenschaft der Kennung und Mittel zur Bewertung der darzustellenden Information als relevant bezüglich des abgeleiteten Benutzerinteresses aufweist.

Vorzugsweise weist das Client-Server-System Mittel zur Durchführung des erfindungsgemäßen Verfahrens auf.

Die Aufgabe wird auch durch einen Informationsserver der eingangs genannten Art dadurch gelöst, dass der Informationsserver Mittel zur Durchführung des erfindungsgemäßen Verfahrens aufweist.

Von besonderer Bedeutung ist die Realisierung dieser Erfindung in Form eines Computerprogramms. Dabei ist das Computerprogramm auf mindestens einem Rechengerät beziehungsweise einem Computer, insbesondere auf einem Server beziehungsweise einem Informationsserver, ablauffähig und zur Ausführung des erfindungsgemäßen Verfahrens programmiert. Insbesondere können zur Ausführung des erfindungsgemäßen Verfahrens Teile des Computerprogramms auf unterschiedlichen Computern beziehungsweise Informationsservern ablaufen. Die Erfindung wird also durch das Computerprogramm realisiert, so dass dieses Computerprogramm in gleicher Weise die Erfindung darstellt wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Access-Memory, ein Read-Only-Memory oder ein Flash-Memory sein. Insbesondere kann das Computerprogramm auf einem dem Informationsserver oder mindestens einer Komponente eines Client-Server-Systems zugeordneten Speicherbereich abgespeichert sein.

Weitere Anwendungsmöglichkeiten und Vorteile der Erfindung ergeben sich aus der nachfolgenden Beschreibung von Ausführungsbeispielen der Erfindung, die in den Zeichnungen dargestellt sind. Es zeigen:
- Figur 1: ein Client-Server-System zur Ausführung des erfindungsgemäßen Verfahrens gemäß einer ersten Ausführungsform;
- Figur 2: ein Client-Server-System zur Ausführung des erfindungsgemäßen Verfahrens in einer zweiten Ausführungsform;
- Figur 3: eine schematische Darstellung einer ersten Netzwerkseite und einer weiteren Netzwerkseite; und
- Figur 4: eine schematische Darstellung eines Ablaufdiagramms gemäß einer beispielhaften Ausführungsform des erfindungsgemäßen Verfahrens.

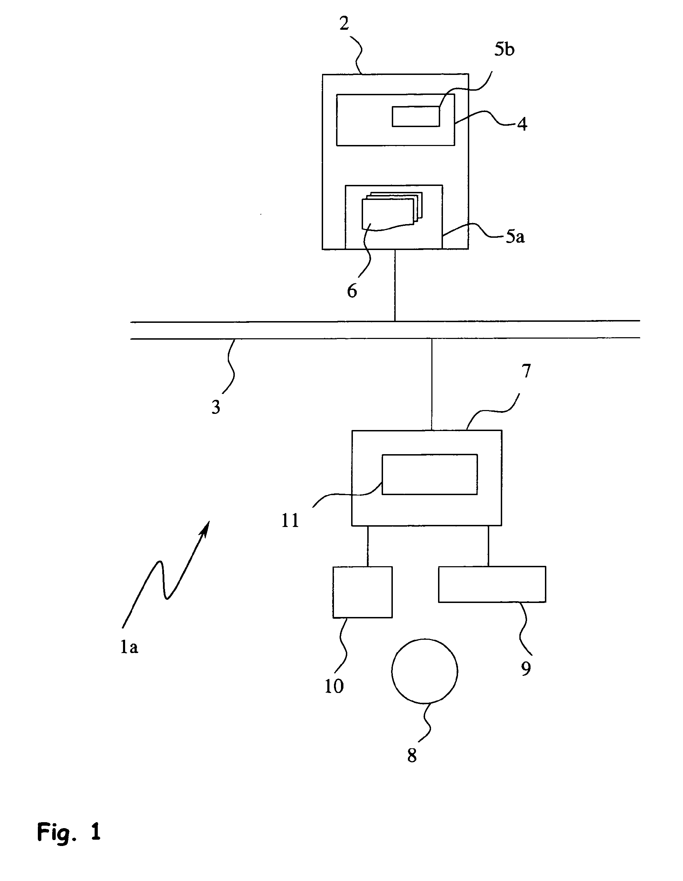

In Figur 1 ist ein Client-Server-System 1a dargestellt, das einen mit einem Kommunikationsnetzwerk 3 verbundenen Informationsserver 2 umfasst. Das Kommunikationsnetzwerk 3 ist beispielsweise als das Internet ausgebildet. Der Informationsserver 2 umfasst einen Speicherbereich 5a, in dem anforderbare Netzwerkseiten 6 abgespeichert sind.

Der Informationsserver 2 umfasst ferner eine Verarbeitungseinheit 4, der ein Speicherbereich 5b zugeordnet ist. Der Speicherbereich 5a ist beispielsweise als eine Datenbank ausgebildet.

Die verarbeitungseinheit 4 umfasst Mittel zur Durchführung des erfindungsgemäßen Verfahrens. Hierzu ist beispielsweise in dem Speicherbereich 5b ein Computerprogramm abgespeichert, das zur Durchführung des erfindungsgemäßen Verfahrens programmiert ist. Die Verarbeitungseinheit 4 kann insbesondere auch funktional interpretiert werden. Dies bedeutet, dass die Verarbeitungseinheit 4 nicht explizit in Hardware realisiert ist. Vielmehr sind in der Verarbeitungseinheit 4 die Funktionalitäten zusammengefasst, die zur Durchführung des erfindungsgemäßen Verfahrens benötigt werden.

Das Client-Server-System 1a weist ferner einen mit dem Kommunikationsnetzwerk 3 verbundenen Client 7 auf. Dem Client 7 sind ein Dateneingabegerät 9, beispielsweise eine Tastatur, und ein Datensichtgerät 10, beispielsweise ein Monitor beziehungsweise ein Display, zugeordnet. Das Dateneingabegerät 9 und das Datensichtgerät 10 dienen der Interaktion eines Benutzers 8 mit dem Client 7. Auf dem Client 7 ist eine Software 11 installiert, die das Anfordern, Interpretieren und Darstellen von Netzwerkseiten ermöglicht. Die Software 11 kann beispielsweise als so genannter Browser ausgeführt sein.

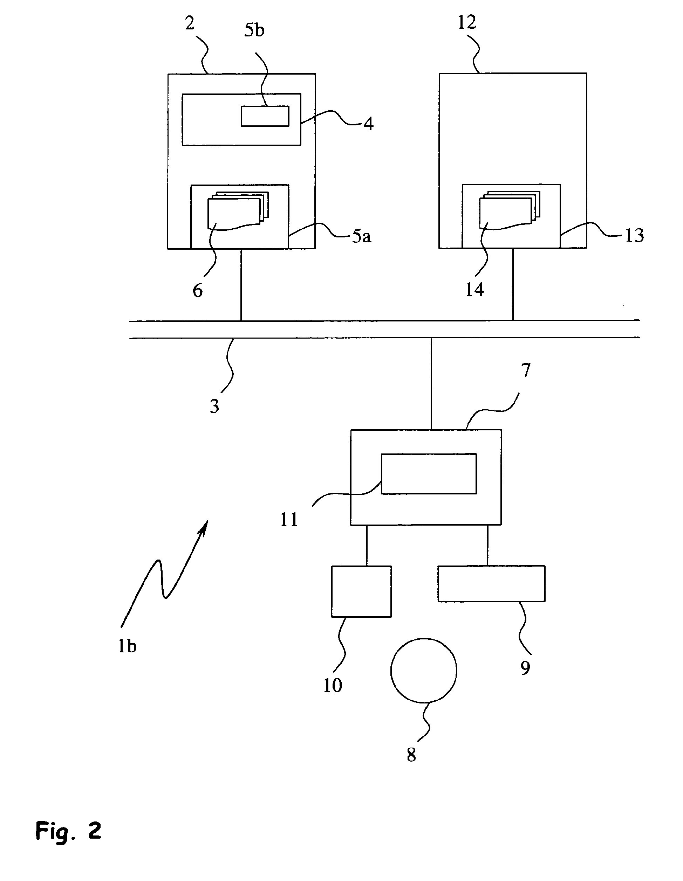

In Figur 2 ist ein Client-Server-System 1b dargestellt. Das Client-Server-System 1b umfasst zusätzlich zu den in Figur 1 dargestellten Komponenten einen weiteren Informationsserver 12, der ebenfalls mit dem Kommunikationsnetzwerk 3 verbunden ist. Der weitere Informationsserver 12 umfasst einen Speicherbereich 13 und Netzwerkseiten 14. Der weitere Informationsserver 12 ist beispielsweise als eine Suchmaschine ausgebildet.

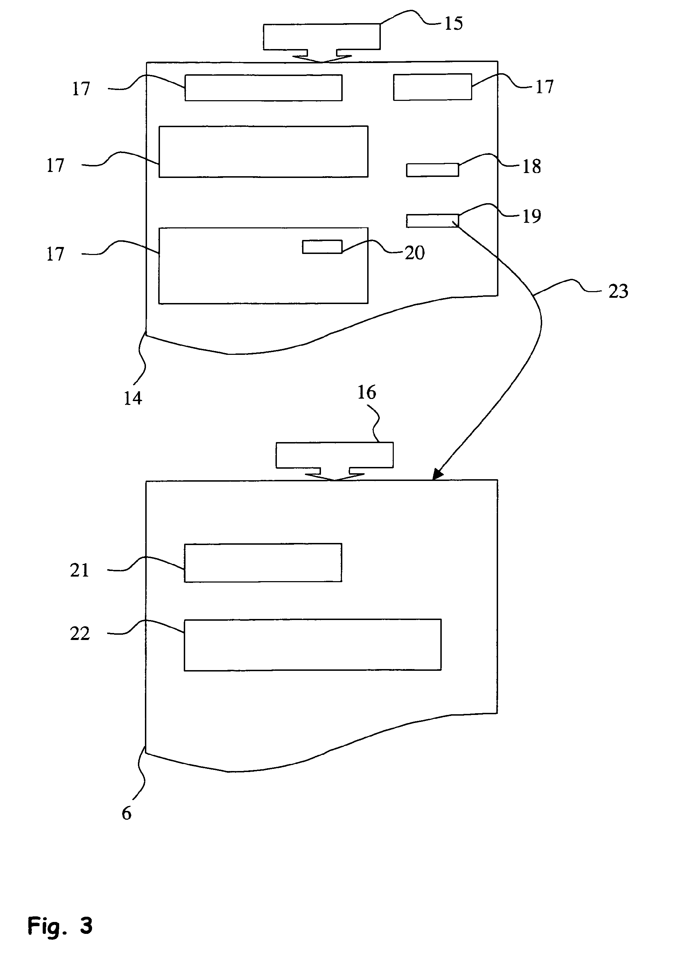

In Figur 3 sind eine erste Netzwerkseite 6 und eine weitere Netzwerkseite 14 schematisch stark vereinfacht dargestellt. Der weiteren Netzwerkseite 14 ist eine Kennung 15 zugeordnet. Die Kennung 15 kann beispielsweise als eine URL ausgebildet sein. Auf der weiteren Netzwerkseite 14 sind Informationen 17 dargestellt.

Auf der weiteren Netzwerkseite 14 sind ferner aktivierbare Links 18, 19, 20 dargestellt. Eine Aktivierung führt zu einer Anforderung der Netzwerkseite, auf die der jeweils aktivierte Link 18, 19, 20 verweist. Der Link 19 verweist beispielsweise auf die erste Netzwerkseite 6. Dies ist symbolisch durch den Pfeil 23 dargestellt. Die erste Netzwerkseite 6 umfasst Informationen 21 und 22. Der ersten Netzwerkseite 6 ist ferner eine Adresse 16, beispielsweise die URL, zugeordnet.

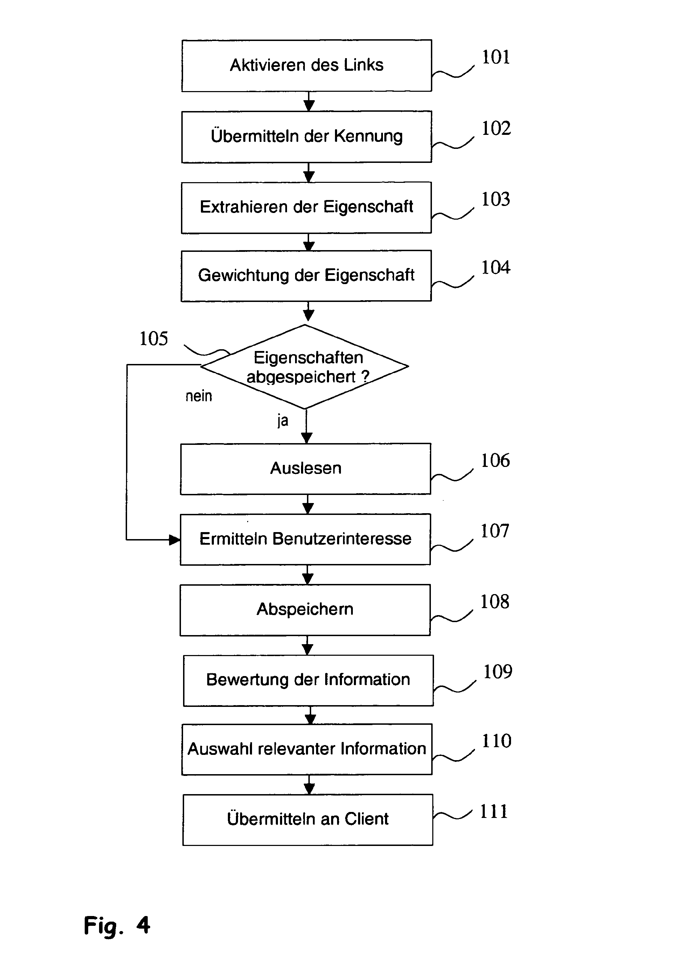

Anhand des in Figur 4 schematisch dargestellten Ablaufdiagramms wird der Ablauf des erfindungsgemäßen Verfahrens bezüglich unterschiedlicher Ausführungsformen des Verfahrens selbst sowie unterschiedlicher Ausführungsformen der Client-Server-Systeme 1a, 1b, der ersten Netzwerkseiten 6, der weiteren Netzwerkseiten 14 sowie der darzustellenden Informationen 21, 22 gezeigt.

Das Verfahren beginnt in einem Schritt 101 durch die Anforderung der weiteren Netzwerkseite 14. Hierzu gibt der Benutzer 8 beispielsweise mittels der Tastatur eine der weiteren Netzwerkseite 14 zugeordnete URL in ein dafür vorgesehenes Texteingabefeld des Browsers ein. Der Client 7 übermittelt daraufhin eine die URL umfassende Anforderung an den weiteren Informationsserver 12. Der weitere Informationsserver 12 veranlasst die Übermittlung der angeforderten Netzwerkseite 14 an den Client 7, wo sie mittels des Browsers dem Benutzer 8 angezeigt wird.

Der weitere Informationsserver 12 ist beispielsweise als eine Suchmaschine ausgebildet. In diesem Fall ist auf der dargestellten Netzwerkseite 14 wieder ein Texteingabefeld vorgesehen, in das ein Suchbegriff oder mehrere Suchbegriffe eingegeben werden können. Die eingegebenen Suchbegriffe werden an den weiteren Informationsserver 12 übermittelt. Der weitere Informationsserver 12 ermittelt dann entsprechend der Suchbegriffe Informationen, erzeugt daraus dynamisch eine weitere Netzwerkseite 14 und übermittelt diese Informationen in Form einer auf der dynamisch erzeugten weiteren Netzwerkseite 14 dargestellten Ergebnisliste an den Client 7. Die Informationen der Ergebnisliste sind beispielsweise bezüglich eines Ranking-Algorithmus sortiert. Jeder Information der Ergebnisliste kann ein Link 18, 19, 20 zugeordnet sein.

Der Benutzer 8 wählt den ihn interessierenden Link 19 aus und aktiviert diesen. Dies bewirkt eine Anforderung der ersten Netzwerkseite 6, auf die der aktivierte Link 19 verweist.

In einem Schritt 102 wird zusammen mit der Anforderung der ersten Netzwerkseite 6 die Kennung 15 an den Informationsserver 2 übermittelt. Die Kennung 15 beschreibt beispielsweise die der weiteren Netzwerkseite 14 zugeordnete URL. Die Kennung 15 beschreibt ferner die Suchbegriffe, die zuvor von dem Benutzer 8 eingegeben wurden und auf Grundlage derer die weitere Netzwerkseite 14 dynamisch erzeugt wurde.

In einem Schritt 103 wird eine Eigenschaft der Kennung 15 extrahiert. Die Eigenschaft kann beispielsweise eine oder mehrere Suchbegriffe beschreiben. Die Eigenschaft kann ferner einen Typ oder die Art des weiteren Informationsservers 12 beschreiben. Ein Typ bzw. eine Art kann beispielsweise beschreiben, ob der weitere Informationsserver 12 als eine Suchmaschine, eine Produktsuchmaschine, ein Newsserver, ein Online-Shop ausgebildet ist. Selbstverständlich sind eine Vielzahl weiterer Arten und insbesondere eine Vielzahl weiterer Eigenschaften vorstellbar. Die in dem Schritt 103 extrahierte Eigenschaft der Kennung 15 kann beispielsweise ein Datum und/oder eine Uhrzeit enthalten.

In einem Schritt 104 wird die Eigenschaft beziehungsweise werden die extrahierten Eigenschaften in Abhängigkeit von vorgegebenen Regeln gewichtet. Hierbei kann beispielsweise vorgesehen sein, dass ein Suchbegriff besonders hoch gewichtet wird. Es ist ferner vorstellbar, dass grundsätzlich eine Eigenschaft höher gewichtet wird, wenn sie aus einer Kennung extrahiert wurde, die einem Online-Shop zugeordnet ist. Durch die Gewichtung kann auch bestimmt werden, dass die Eigenschaft nicht verwertet wird, wenn sie von einem vorbestimmbaren weiteren Informationsserver 12 stammt.

In einem Schritt 105 wird geprüft, ob bereits Eigenschaften abgespeichert sind. Ebenso kann in dem Schritt 105 geprüft werden, ob bereits Benutzerinteressen abgespeichert sind.

Ist dies der Fall, werden diese in einem Schritt 106 ausgelesen. Die Eigenschaften beziehungsweise Benutzerinteressen können beispielsweise in einer Datenbank abgespeichert sein.

In einem Schritt 107 wird von den extrahierten beziehungsweise ausgelesenen Eigenschaften beziehungsweise den ausgelesenen und damit zu einem vorherigen Zeitpunkt ermittelten Benutzerinteressen ein neues Benutzerinteresse ermittelt. Ebenso ist vorstellbar, dass in dem Schritt 107 ein bereits abgespeichertes Benutzerinteresse aktualisiert wird.

Ein Benutzerinteresse kann beispielsweise Informationen enthalten, die in Form einer zwei- oder mehrdimensionalen Matrix darstellbar sind. So können aus unterschiedlichen Eigenschaften unterschiedliche Benutzerinteressen abgeleitet werden. Ferner können unterschiedliche Gewichtungen berücksichtigt werden. Insgesamt können damit alle bereits abgespeicherten Eigenschaften und Benutzerinteressen in ihrer Gesamtheit als Benutzerinteresse betrachtet beziehungsweise interpretiert werden. In diesem Fall würde in dem Schritt 107 folglich das Benutzerinteresse aktualisiert werden. Grundsätzlich sind dies jedoch lediglich unterschiedliche Betrachtungsweisen desselben funktionalen Zusammenhangs.

Das in dem Schritt 107 ermittelte beziehungsweise aktualisierte Benutzerinteresse beschreibt nicht notwendig das Interesse des Benutzers 8. Vielmehr beschreibt das Benutzerinteresse ein mögliches Interesse vieler Benutzer. Beispielsweise können Informationen unterschiedlicher Benutzer 8 abgespeichert beziehungsweise ausgewertet werden, wenn sie den Link 19 auf der weiteren Netzwerkseite 14 beziehungsweise einen zu dem Link 19 äquivalenten, auf einer anderen Netzwerkseite dargestellten Link aktivieren, der einen Verweis zu der ersten Netzwerkseite 6 darstellt.

In einem Schritt 108 wird das aktualisierte Benutzerinteresse abgespeichert.

In einem Schritt 109 wird die Netzwerkseite 6 beziehungsweise die darzustellenden Informationen 21, 22 bezüglich des ermittelten Benutzerinteresses derart bewertet, dass eine Aussage über die mögliche Relevanz der darzustellenden Information möglich ist.

Damit ist eine Bewertung der darzustellenden Informationen 21, 22 und damit insgesamt der ersten Netzwerkseite 6 bezüglich eines allgemeinen Benutzerinteresses möglich, ohne dass ein Zugriff auf individuelle Profilinformationen notwendig ist. Die Bewertung der darzustellenden Informationen 21, 22 beziehungsweise der ersten Netzwerkseite 6 erfolgt damit grundsätzlich auf Basis einer Sammlung von Informationen, die durch die bei der Aktivierung des Links 19 übermittelten Eigenschaften beschrieben sind. Die Bewertung der darzustellenden Informationen 21, 22 nutzt ferner implizit eine Auswahl durch den Benutzer 8 aus, da dieser den Link 19 aktiviert. Dies bedeutet, dass die erste Netzwerkseite 6 grundsätzlich eine relativ hohe Relevanz bezüglich des ermittelten Benutzerinteresses aufweisen kann.

Das in Figur 4 dargestellte Verfahren kann nun besonders vorteilhaft dadurch in einem Schritt 110 fortgesetzt werden, dass auf der ersten Netzwerkseite 6 nur derartige Informationen 21, 22 dargestellt werden, die eine besonders hohe Relevanz bezüglich des ermittelten Benutzerinteresses aufweisen. Ist der weitere Informationsserver 12 beispielsweise als eine Suchmaschine ausgebildet, so können die Suchbegriffe bei einer Aktivierung des Links 19 in dem Schritt 101 an den ersten Informationsserver 2 in Form der erwähnten Eigenschaften übermittelt werden. Die darzustellenden Informationen können nun konkret gegenüber dieser Suchbegriffe beurteilt werden. Darzustellende Informationen 21, 22, die bezüglich der aktuell extrahierten Eigenschaften eine geringere Relevanz aufweisen, werden beispielsweise nicht oder an untergeordneter Position dargestellt.

In einem Schritt 111 wird die so erstellte erste Netzwerkseite 6 an den Client 7 übermittelt.

Das erfindungsgemäße Verfahren ermöglicht somit grundsätzlich die Bewertung einer ersten Netzwerkseite 6 bezüglich eines nicht notwendig persönlichen Benutzerinteresses, sondern insbesondere auch eines die Interessen einer Benutzergruppe beschreibenden Benutzerinteresses. Diese Information wiederum kann dazu verwendet werden zu beurteilen, ob eine erste Netzwerkseite 6, beziehungsweise ein erster Informationsserver 2, für eine vorgegebene Menge von Eigenschaften, beispielsweise von Suchbegriffen, relevant ist. Insbesondere kann damit implizit erfasst werden, welche Eigenschaften beziehungsweise welche Suchbegriffe, besonders häufig mit einer Anforderung der ersten Netzwerkseite 6 in Verbindung standen.

Diese Informationen könnten nun wiederum an eine Suchmaschine weitergeleitet werden. Werden Suchbegriffe von einem Benutzer 8 eingegeben, bezüglich derer mittels des erfindungsgemäßen Verfahrens zuvor bereits eine besonders hohe Relevanz der ersten Netzwerkseite 6 ermittelt worden ist, so kann die Suchmaschine vorsehen, dass der Link 19 an besonders bevorzugter Position dargestellt werden soll.

Damit ist mittels des erfindungsgemäßen Verfahrens auch eine Rückkopplung und damit eine Verbesserung bereits bekannter Ranking-Verfahren möglich.

Das erfindungsgemäße Verfahren hat aber insbesondere auch den Vorteil, dass ein erster Informationsserver 2 beziehungsweise eine von dem ersten Informationsserver 2 abrufbare erste Netzwerkseite 6 dahingehend bewertet werden kann, bezüglich welcher Eigenschaften beziehungsweise bezüglich welcher Suchbegriffe, die erste Netzwerkseite 6 besonders häufig angefordert wurde. Diese Eigenschaften können nun für statistische Zwecke ausgewertet werden. Insbesondere können diese Eigenschaften jedoch auch derart ausgewertet werden, dass beispielsweise genau diese Suchbegriffe bei anderen Suchmaschinen eingebucht werden, wodurch diese Netzwerkseite beziehungsweise der dieser Netzwerkseite 6 zugeordnete Link 19 stets dann auf der weiteren Netzwerkseite 14 dargestellt wird, wenn die Eigenschaft erfüllt ist, beziehungsweise wenn von einem Benutzer 8 genau diese Suchbegriffe eingegeben werden. Damit kann indirekt die Treffergenauigkeit einer von einer Suchmaschine erzeugten Ergebnisliste erhöht werden.

Insbesondere kann aber auch erreicht werden, dass Suchbegriffe beziehungsweise Eigenschaften zukünftig nicht mehr zu einer Darstellung des Links 19 auf einer weiteren Netzwerkseite 14 führen, wenn mittels des erfindungsgemäßen Verfahrens ermittelt wurde, dass die erste Netzwerkseite 6, beziehungsweise die auf der ersten Netzwerkseite 6 darzustellenden Informationen 21, 22, nur eine geringe Relevanz bezüglich bestimmter Eigenschaften oder Suchbegriffe aufweist.

Es kann somit mittels des erfindungsgemäßen Verfahrens die Relevanz von über das Kommunikationsnetzwerk 3 zu übertragenden Daten erhöht werden, was gleichzeitig eine Reduzierung der Übertragung von wenig relevanten Daten bedeutet. Damit kann insbesondere das zu übertragende Datenvolumen deutlich reduziert werden.

Das erfindungsgemäße Verfahren bietet ferner die Möglichkeit, die auf der angeforderten ersten Netzwerkseite 6 darzustellenden Informationen 21, 22 auch danach auszuwählen, wie hoch die Relevanz bezüglich des allgemeinen Benutzerinteresses beziehungsweise bezüglich eines aktuellen Benutzerinteresses ist. Die Unterscheidung des allgemeinen Benutzerinteresses beziehungsweise eines aktuellen Benutzerinteresses kann besonders gut durch eine unterschiedliche Gewichtung der Eigenschaften erreicht werden. Beispielsweise sind die aktuell erfassten Eigenschaften höher gewichtet als die vormalig erfassten und abgespeicherten Eigenschaften. Ferner kann vorgesehen sein, dass die abgespeicherten Eigenschaften altern und in Abhängigkeit von dem Alter an Gewicht verlieren. Somit kann sichergestellt werden, dass eine Adaption der Bewertung an unterschiedliche Benutzerinteressen mit der Zeit möglich ist.

Selbstverständlich sind eine Vielzahl weiterer Ausführungsformen vorstellbar. Insbesondere können konkrete Profilinformationen, die beispielsweise von dem Benutzer 8 in Form eines Cookies an den ersten Informationsserver 2 zusammen mit der Anforderung der ersten Netzwerkseite 6 übermittelt werden, ausgewertet werden und somit zu einer verbesserten Auswahl der darzustellenden Information 21, 22 herangezogen werden.

Ferner sind eine Vielzahl unterschiedlicher Verfahren zur Ermittlung des Benutzerinteresses anhand der übermittelten Eigenschaften möglich. Hierzu werden beispielsweise bekannte Verfahren wissensbasierter Systeme beispielsweise in Form regelbasierter Expertensysteme eingesetzt. Ein aktuelles Benutzerinteresse beziehungsweise ein das Interesse einer Benutzergruppe beschreibendes Benutzerinteresse kann insbesondere in Form einer mehrdimensionalen Matrix beschreibbar sein.

Selbstverständlich sind eine Vielzahl weiterer Repräsentationen des Benutzerinteresses vorstellbar. Insbesondere kann dieses implizit in einer Datenbank abgespeichert sein und in Abhängigkeit von einer konkreten Anfrage eine mögliche Relevanz zurückliefern.

Es ist ferner vorstellbar, dass auf der ersten Netzwerkseite 6 Zusatzinformationen dargestellt werden, die ebenfalls mittels des erfindungsgemäßen Verfahrens, beispielsweise wie die Auswahl der darzustellenden Information 21, 22 in dem Schritt 110, ausgewählt werden. Durch die gezielte Darstellung von Zusatzinformationen kann eine explizite Anfrage derartiger Informationen durch einen Benutzer 8 möglicherweise vorweggenommen werden. Damit kann nochmals eine Reduzierung des zu übertragenden Datenvolumens beziehungsweise eine Verringerung der Belastung des Kommunikationsnetzwerks 3 erreicht werden.

Insbesondere ist es möglich, die Bewertungen bzw. Eigenschaften von Kennungen, die für die Bewertungen herangezogen werden, von dem ersten Informationsserver (2) an eine in den Figuren nicht dargestellte Suchmaschine zu übermitteln. Diese erhält damit Informationen darüber, wie Netzwerkseiten bzw. Informationen, die von dem ersten Informationsserver (2) angefordert werden können, bewertet worden sind, bzw. welche Kennungen für die Bewertung verwendet worden sind. Auf Grundlage dieser Informationen wiederum kann die Suchmaschine ein Ranking-Verfahren realisieren. Wird dann von dem Benutzer 8 beispielsweise eine Information mittels der Suchmaschine gesucht, die von dem ersten Informationsserver 2 beispielsweise auf der ersten Netzwerkseite 6 darstellbar ist, so kann die Suchmaschine eine Ergebnisliste erzeugen, auf der der Link 19 dargestellt ist. Die Positionierung des Links 19 innerhalb der Ergebnisliste kann dann aber in Abhängigkeit von dem erfindungsgemäßen Ranking-Verfahren erfolgen, das die bereits durchgeführten Bewertungen berücksichtigt.

Damit ist folglich eine ständige Verbesserung des Rankings möglich, wobei stets aktuelle Benutzerinteressen berücksichtigt werden.

Ferner kann die Suchmaschine die Kennungen auswerten. Da die Kennungen beispielsweise auch Informationen darüber enthalten, von welchem weiteren Informationsserver 12 der Link 19 bereits auf einer weiteren Netzwerkseite 14 dargestellt war, als die Bewertung erstellt wurde, kann auch eine derartige Information, beispielsweise in Form von einer Gewichtung in Abhängigkeit davon, auf welchem weiteren Informationsserver 12 der Link 19 damals dargestellt war, für das Ranking verwendet werden. Die in den Figuren nicht dargestellte Suchmaschine kann damit folglich wiederum auch dieselbe Funktionalität innerhalb des erfindungsgemäßen Verfahrens übernehmen, wie der weitere Informationsserver 12, der als Suchmaschine ausgebildet ist, wobei nun jedoch das Ranking bei einer Suchanfrage bereits die Ergebnisse von zurückliegenden Bewertungen berücksichtigt. Damit ist also automatisch eine stetige Adaption von Ranking-Verfahren möglich, ohne dass hierfür aufwändige Mechanismen entwickelt werden müssten.

## Patentansprüche

1. Verfahren zur Bewertung einer von einem Informationsserver (2) auf einer ersten Netzwerkseite (6) darzustellenden Information (21, 22), wobei die Netzwerkseite (6) durch Aktivierung eines auf mindestens einer weiteren Netzwerkseite (14) dargestellten Links (19) durch einen Benutzer (8) anforderbar ist und bei einer Aktivierung des Links (19) eine der weiteren Netzwerkseite (14) zugeordnete Kennung (15) an den Informationsserver (2) übermittelt wird, **dadurch gekennzeichnet, dass** in Abhängigkeit von mindestens einer Eigenschaft der Kennung (15) ein Benutzerinteresse abgeleitet wird und die darzustellende Information (21, 22) als relevant bezüglich dieses Benutzerinteresses bewertet wird.

2. Verfahren nach Anspruch 1, **dadurch gekennzeichnet, dass** die Eigenschaft der Adresse ein Datum, eine Uhrzeit, einen Informationsserver, ein gekauftes Produkt oder einen Suchbegriff beschreibt.

3. Verfahren nach einem der vorangehenden Ansprüche, **dadurch gekennzeichnet, dass** die Eigenschaft abgespeichert wird und bei einer erneuten Aktivierung des Links (19) oder eines auf einer nochmals weiteren Netzwerkseite dargestellten Links (19) ein Benutzerinteresse in Abhängigkeit von der mindestens einen abgespeicherten Eigenschaft und der aktuell erfassten Eigenschaft abgeleitet wird.

4. Verfahren nach einem der vorangehenden Ansprüche, **dadurch gekennzeichnet, dass** das abgeleitete Benutzerinteresse abgespeichert wird und bei einer erneuten Aktivierung des Links (19) oder des auf einer nochmals weiteren Netzwerkseite dargestellten Links (19) ein Benutzerinteresse in Abhängigkeit von dem abgespeicherten Benutzerinteresse und der aktuell erfassten Eigenschaft oder in Abhängigkeit von dem abgespeicherten Benutzerinteresse und einem von der erfassten Eigenschaft abgeleiteten Benutzerinteresse abgeleitet wird.

5. Verfahren nach einem der vorangehenden Ansprüche, **dadurch gekennzeichnet, dass** eine Gewichtung der Eigenschaften oder der Benutzerinteressen durchgeführt wird, wobei das Gewicht den Einfluss der Eigenschaft oder des Benutzerinteresses bezüglich eines neu abgeleiteten Benutzerinteresses beschreibt.

6. Verfahren nach Anspruch 5, **dadurch gekennzeichnet, dass** eine aktuell erfasste Eigenschaft höher gewichtet wird als eine abgespeicherte Eigenschaft.

7. Verfahren nach einem der Ansprüche 5 oder 6, **dadurch gekennzeichnet, dass** ein von einer aktuell erfassten Eigenschaft abgeleitetes Benutzerinteresse höher bewertet wird als ein abgespeichertes Benutzerinteresse.

8. Verfahren nach einem der vorangehenden Ansprüche, **dadurch gekennzeichnet, dass** eine Gewichtung in Abhängigkeit von
- einem der Erfassung der Kennung zugeordneten Zeitpunkt,
- einem der Bildung des Benutzerinteresses zugeordneten Zeitpunkt oder
- einer Art der Eigenschaft gebildet wird.

9. Verfahren nach einem der vorangehenden Ansprüche, **dadurch gekennzeichnet, dass** das Benutzerinteresse zusätzlich in Abhängigkeit von einer Klassifizierung der ersten Netzwerkseite (6) oder in Abhängigkeit von einer Klassifizierung des Informationsservers (2) gebildet wird.

10. Verfahren nach Anspruch 9, **dadurch gekennzeichnet, dass** die Klassifizierung bezüglich eines thematischen Inhalt oder einer Informationsart erfolgt.

11. Verfahren nach einem der vorangehenden Ansprüche, **dadurch gekennzeichnet, dass** die auf der ersten Netzwerkseite darzustellende Information (21, 22) oder eine Zusatzinformation in Abhängigkeit von dem abgeleiteten Benutzerinteresse ausgewählt wird.

12. Verfahren nach einem der vorangehenden Ansprüche, **dadurch gekennzeichnet, dass** die darzustellende Information (21, 22) oder eine Zusatzinformation in Abhängigkeit von einer dem Benutzer zugeordneten Profilinformation ausgewählt wird.

13. Verfahren nach Anspruch 12, **dadurch gekennzeichnet, dass** die Profilinformation in einem Benutzerprofil abgespeichert wird.

14. Verfahren nach einem der vorangehenden Ansprüche, **dadurch gekennzeichnet, dass** das Benutzerinteresse zusätzlich in Abhängigkeit von mindestens einer Profilinformation gebildet wird.

15. Verfahren nach Anspruch 14, **dadurch gekennzeichnet, dass** die auf der ersten Netzwerkseite (6) darzustellende Information (21, 22) einen Link zu einer weiteren Information beschreibt.

16. Verfahren nach einem der vorangehenden Ansprüche, **dadurch gekennzeichnet, dass** der auf der weiteren Netzwerkseite (14) dargestellte und auf die erste Netzwerkseite (6) verweisende Link (19) in Abhängigkeit von dem Ergebnis eines Ranking-Verfahrens platziert wird, wobei das Ranking in Abhängigkeit von dem für die erste Netzwerkseite (6) ermittelten Benutzerinteresses ermittelt wird.

17. Verfahren nach einem der vorangehenden Ansprüche, **dadurch gekennzeichnet, dass** zusammen mit der weiteren Netzwerkseite (14) eine Instruktion an den Client übermittelt wird, die den Client bei einer Anforderung der ersten Netzwerkseite (6) veranlasst, die Kennung an den ersten Informationsserver (2) zu übermitteln.

18. Verfahren nach Anspruch 17, **dadurch gekennzeichnet, dass** die Instruktion in Form eines Skripts oder eines Tags an den Client (7) übermittelt wird.

19. Verfahren nach einem der vorangehenden Ansprüche, **dadurch gekennzeichnet, dass** der Informationsserver (2) die bezüglich der darzustellenden Information oder bezüglich der ersten Netzwerkseite (6) erzeugte Bewertung oder mindestens eine Eigenschaft der bei der Bildung der Bewertung herangezogenen Kennungen an eine Suchmaschine übermittelt und die Suchmaschine anhand der Bewertung ein Ranking der Informationen durchführt, die in Abhängigkeit von der Suchanfrage in Form einer Ergebnisliste erzeugt und in Beantwortung der Suchanfrage übermittelt werden.

20. Verfahren nach Anspruch 19, **dadurch gekennzeichnet, dass** eine Vielzahl von Informationsservern (2) die bezüglich darzustellende Information oder bezüglich der ersten Netzwerkseiten (6) erzeugten Bewertungen oder mindestens eine Eigenschaft der bei der Bildung der Bewertungen herangezogenen Kennungen an die Suchmaschine übermitteln.

21. Client-Server System (1a, 1b), umfassend einen mit einem Kommunikationsnetzwerk (3) verbindbaren Client (7) und einen mit dem Kommunikationsnetzwerk (3) verbindbaren Informationsserver (2), wobei der Informationsserver (2) Mittel zur Übermittlung mindestens einer auf einer Netzwerkseite (6) darzustellenden Information (21, 22) an den Client (7) in Abhängigkeit von einer Aktivierung eines auf mindestens einer weiteren Netzwerkseite (14) dargestellten Links (19) aufweist und wobei das Client-Server System (1a, 1b) eine Auswerteeinheit und Mittel zur Übermittlung einer der weiteren Netzwerkseite zugeordneten Kennung (15) an die Auswerteeinheit aufweist, **dadurch gekennzeichnet, dass** das Client-Server System (1a, 1b) Mittel zur Bildung eines Benutzerinteresses in Abhängigkeit von mindestens einer Eigenschaft der Kennung (15) und Mittel zur Bewertung der darzustellenden Information (21, 22) als relevant bezüglich des abgeleiteten Benutzerinteresses aufweist.

22. Client-Server System (1a, 1b) nach Anspruch 21, **dadurch gekennzeichnet, dass** das Client-Server System (1a, 1b) Mittel zur Durchführung eines Verfahrens nach einem der Ansprüche 1 bis 20 aufweist.

23. Informationsserver (2), der innerhalb eines Client-Server Systems (1a, 1b) über ein Kommunikationsnetzwerk (3) verbindbar ist, **dadurch gekennzeichnet, dass** der Informationsserver (2) Mittel zur Durchführung eines Verfahrens nach einem der Ansprüche 1 bis 20 aufweist.

24. Computerprogramm, das auf einem Client-Server System (1a, 1b), insbesondere auf einem Informationsserver (2), ablauffähig ist, **dadurch gekennzeichnet, dass** ein Verfahren nach einem der Ansprüche 1 bis 20 durchgeführt wird, wenn das Computerprogramm auf dem Client-Server System (1a, 1b) abläuft.

25. Computerprogramm nach Anspruch 24, **dadurch gekennzeichnet, dass** das Computerprogramm auf einem Speicherelement abgespeichert ist, wobei das Speicherelement als ein Read-Only-Memory (ROM), ein Random-Access-Memory (RAM), eine Festplatte (hard disc), eine Compact Disc (CD), eine Digital Versatile Disc (DVD) oder mindestens ein mindestens einer Komponente des Client-Server Systems (1a, 1b) zugeordneter Speicherbereich (5b) ausgebildet ist.
